# EUROPEAN PATENT APPLICATION

(11) **EP 4 668 874 A1**
(43) Date of publication of application: **24.12.2025**
(21) Application number: 23921750.8
(22) Date of filing: 15.02.2023
(51) Int. Cl.: H04W 52/02

(54) **WIRELESS COMMUNICATION METHOD, NETWORK DEVICE, AND AMBIENT POWER (AMP) DEVICE**

(71) Applicant: GUANGDONG OPPO MOBILE TELECOMMUNICATIONS CORP., LTD., Dongguan, Guangdong 523860 (CN)
(72) Inventor: HE, Chuanfeng, Dongguan, Guangdong 523860 (CN)
(74) Representative: Mewburn Ellis LLP
(86) International application number: PCT/CN2023/076182
(87) International publication number: WO 2024/168586

(57) **Abstract**

A method for wireless communication, a network device, and an ambient power-enabled (AMP) device are provided. The method includes the following. A network device transmits a first signal to an AMP device, where the first signal contains system parameter update information.

## Description

### TECHNICAL FIELD

This disclosure relates to the field of communication, in particular to a method for wireless communication, a network device, and an ambient power-enabled (AMP) device.

### BACKGROUND

In zero-power communication, zero-power devices need to harvest energy, and then can communicate with a network device. In a communication system, terminal devices are required to periodically receive public control information delivered by the network device. Communication between the zero-power device and the network device is affected by the remaining battery level of the zero-power device, and thus the zero-power device is not suitable to receive information from the network device frequently. Therefore, in a case where the zero-power device is introduced into the communication system, how to receive public control information is an urgent problem to be solved.

### SUMMARY

A method for wireless communication, a network device, and an ambient power-enabled (AMP) device are provided in the present disclosure. A zero-power device can receive system information according to system parameter update information from the network device, which is conducive to reducing the power consumption of the zero-power device.

In a first aspect, a method for wireless communication is provided. The method includes the following. A network device transmits a first signal to an AMP device, where the first signal contains system parameter update information.

In a second aspect, a method for wireless communication is provided. The method includes the following. An AMP device receives a first signal transmitted by a network device, where the first signal contains system parameter update information.

In a third aspect, a terminal device is provided. The terminal device is configured to perform the method in the first aspect or various implementations of the first aspect.

Specifically, the terminal device includes a functional module(s) for performing the method in the first aspect or various implementations of the first aspect.

In a fourth aspect, a network device is provided. The network device is configured to perform the method in the second aspect or various implementations of the second aspect.

Specifically, the network device includes a functional module(s) for performing the method of the second aspect or various implementations of the second aspect.

In a fifth aspect, a terminal device is provided. The terminal device includes a processor and a memory. The memory is configured to store a computer program. The processor is configured to invoke and execute the computer program stored in the memory, to perform the method in the first aspect or various implementations of the first aspect.

In a sixth aspect, a network device is provided. The network device includes a processor and a memory. The memory is configured to store a computer program. The processor is configured to invoke and execute the computer program stored in the memory, to perform the method in the second aspect or various implementations of the second aspect.

In a seventh aspect, a chip is provided. The chip is configured to implement the method of any one of the first aspect and the second aspect or various implementations of the first aspect and the second aspect.

Specifically, the chip includes a processor. The processor is configured to invoke and execute a computer program stored in a memory, to cause a device equipped with the apparatus to perform the method in any one of the first aspect and the second aspect or various implementations of the first aspect and the second aspect.

In an eighth aspect, a computer-readable storage medium is provided. The computer-readable storage medium is configured to store a computer program that can cause a computer to perform the method of any one of the first aspect and the second aspect or various implementations of the first aspect and the second aspect.

In a ninth aspect, a computer program product is provided. The computer program product includes computer program instructions that can cause a computer to perform the method in any one of the first aspect and the second aspect or various implementations of the first aspect and the second aspect.

In a tenth aspect, a computer program is provided. The computer program, when executed by a computer, causes the computer to perform the method in any one of the first aspect and the second aspect or various implementations of the first aspect and the second aspect.

With the technical solution, the network device can indicate the system parameter update information to the AMP device, and the AMP device can receive a system parameter(s) according to the system parameter update information. For example, in the case where no system parameter update occurs, the AMP device will receive no system parameter, which is beneficial to the power saving of the AMP device.

### BRIEF DESCRIPTION OF THE DRAWINGS

FIG. 1 is a schematic diagram of an architecture of a communication system provided in embodiments of the present disclosure.
FIG. 2 is a schematic diagram illustrating a zero-power communication system according to an example of the present disclosure.
FIG. 3 is a schematic diagram illustrating energy harvesting according to an embodiment of the present disclosure.
FIG. 4 is a schematic diagram illustrating backscatter communication according to an embodiment of the present disclosure.
FIG. 5 is a schematic circuit diagram illustrating a resistance-based load modulation according to an embodiment of the present disclosure.
FIG. 6 is a schematic diagram of a format of a physical layer (PHY) protocol data unit (PPDU).
FIG. 7 is a schematic diagram of a format of a data part in a PPDU.
FIG. 8 is a schematic diagram of a format of a frame control part in a medium access control (MAC) header in a PPDU.
FIG. 9 is a schematic diagram of a method for wireless communication provided in embodiments of the present disclosure.
FIG. 10 is a schematic diagram of a format of a PPDU carrying system parameter update information provided in embodiments of the present disclosure.
FIG. 11 is a schematic diagram of another format of a PPDU carrying system parameter update information provided in embodiments of the present disclosure.
FIG. 12 is a schematic diagram of yet another format of a PPDU carrying system parameter update information provided in embodiments of the present disclosure.
FIG. 13 is a schematic diagram of yet another format of a PPDU carrying system parameter update information provided in embodiments of the present disclosure.
FIG. 14 is a schematic diagram of yet another format of a PPDU carrying system parameter update information provided in embodiments of the present disclosure.
FIG. 15 is a schematic diagram of yet another format of a PPDU carrying system parameter update information provided in embodiments of the present disclosure.
FIG. 16 is a schematic diagram of yet another format of a PPDU carrying system parameter update information provided in embodiments of the present disclosure.
FIG. 17 is a schematic diagram of yet another format of a PPDU carrying system parameter update information provided in embodiments of the present disclosure.
FIG. 18 is a schematic diagram of yet another format of a PPDU carrying system parameter update information provided in embodiments of the present disclosure.
FIG. 19 is a schematic diagram of yet another format of a data part in a PPDU carrying system parameter update information provided in embodiments of the present disclosure.
FIG. 20 is a schematic diagram of yet another format of a data part in a PPDU carrying system parameter update information provided in embodiments of the present disclosure.
FIG. 21 is a schematic block diagram of a network device provided in embodiments of the present disclosure.
FIG. 22 is a schematic block diagram of an ambient power-enabled (AMP) device provided in embodiments of the present disclosure.
FIG. 23 is a schematic block diagram of a communication device provided in embodiments of the present disclosure.
FIG. 24 is a schematic block diagram of a chip provided in embodiments of the present disclosure.
FIG. 25 is a schematic block diagram of a communication system provided in embodiments of the present disclosure.

### DETAILED DESCRIPTION

The following will describe technical solutions of embodiments of the present disclosure with reference to the accompanying drawings in embodiments of the present disclosure. Apparently, embodiments mentioned herein are merely some embodiments, rather than all embodiments, of the present disclosure. Based on the embodiments of the present disclosure, all other embodiments obtained by those of ordinary skill in the art without creative effort shall fall within the protection scope of the present disclosure.

The technical solutions of embodiments of the present disclosure are applicable to various communication systems, for example, a global system of mobile communication (GSM), a code division multiple access (CDMA) system, a wideband code division multiple access (WCDMA) system, a general packet radio service (GPRS), a long term evolution (LTE) system, an advanced LTE (LTE-A) system, a new radio (NR) system, an evolved system of an NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area network (WLAN), a wireless fidelity (WiFi), a 5th-generation (5G) communication system, a cellular internet of things (IoT) system, a cellular passive IoT system, or other communication systems.

Generally speaking, a conventional communication system generally supports a limited number (quantity) of connections and therefore is easy to implement. However, with development of communication technology, a mobile communication system will not only support conventional communication but also support, for example, device to device (D2D) communication, machine to machine (M2M) communication, machine type communication (MTC), vehicle to vehicle (V2V) communication, or vehicle to everything (V2X) communication, etc. Embodiments of the present disclosure are also applicable to these communication systems.

Optionally, the communication system in embodiments of the present disclosure is applicable to a carrier aggregation (CA) scenario, or is applicable to a dual connectivity (DC) scenario, or is applicable to a standalone (SA) network deployment scenario.

Optionally, the communication system in embodiments of the present disclosure is applicable to an unlicensed spectrum, and an unlicensed spectrum may be regarded as a shared spectrum. Or the communication system in embodiments of the present disclosure is applicable to a licensed spectrum, and a licensed spectrum may be regarded as a non-shared spectrum.

Various embodiments of the present disclosure are elaborated in connection with a network device and a terminal device. The terminal device may also be referred to as a user equipment (UE), an access terminal, a subscriber unit, a subscriber station, a mobile station, a remote station, a remote terminal, a mobile device, a user terminal, a terminal, a wireless communication device, a user agent, or a user device, etc.

In embodiments of the present disclosure, the network device may be a device configured to communicate with a mobile device, and the network device may be an access point (AP) in a WLAN, a base transceiver station (BTS) in GSM or CDMA, or may be a Node B (NB) in WCDMA, or may be an evolutional Node B (eNB or eNodeB) in LTE, or a relay station or AP, or an in-vehicle device, a wearable device, a network device (gNB) in an NR network, a network device in a cellular IoT, a network device in a cellular passive IoT, a network device in a future evolved PLMN, or a network device in an NTN, etc.

By way of explanation rather than limitation, in embodiments of the present disclosure, the network device may be mobile. For example, the network device may be a mobile device. Optionally, the network device may be a satellite or a balloon base station. For example, the satellite may be a low earth orbit (LEO) satellite, a medium earth orbit (MEO) satellite, a geostationary earth orbit (GEO) satellite, a high elliptical orbit (HEO) satellite, etc. Optionally, the network device may also be a base station deployed on land or water.

In embodiments of the present disclosure, the network device serves a cell, and the terminal device communicates with the network device on a transmission resource (for example, a frequency-domain resource or a spectrum resource) for the cell. The cell may be a cell corresponding to the network device (for example, a base station). The cell may belong to a macro base station, or may belong to a base station corresponding to a small cell. The small cell may include: a metro cell, a micro cell, a pico cell, a femto cell, and the like. These small cells are characterized by small coverage and low transmission power and are adapted to provide data transmission service with high-rate.

The terminal device may be a station (ST) in a WLAN, a cellular radio telephone, a cordless telephone, a session initiation protocol (SIP) telephone, a wireless local loop (WLL) station, a personal digital assistant (PDA), a handheld device or a computing device with wireless communication functions, other processing devices coupled with a wireless modem, an in-vehicle device, a wearable device, and a terminal device in a next-generation communication system, for example, a terminal device in an NR network, a terminal device in a future evolved public land mobile network (PLMN), a terminal device in a cellular IoT, or a terminal device in a cellular passive IoT.

In embodiments of the present disclosure, the terminal device may be deployed on land, which includes indoor or outdoor, handheld, wearable, or in-vehicle. The terminal device may also be deployed on water (such as ships, etc.). The terminal device may also be deployed in the air (such as airplanes, balloons, satellites, etc.).

In embodiments of the present disclosure, the terminal device may be a mobile phone, a pad, a computer with wireless transceiver functions, a virtual reality (VR) terminal device, an augmented reality (AR) terminal device, a wireless terminal device in industrial control, a wireless terminal device in self-driving, a wireless terminal device in remote medicine, a wireless terminal device in smart grid, a wireless terminal device in transportation safety, a wireless terminal device in smart city, or a wireless terminal device in smart home, etc.

By way of explanation rather than limitation, in embodiments of the present disclosure, the terminal device may also be a wearable device. The wearable device may also be referred to as a wearable smart device, which is a generic term of wearable devices obtained through intelligentization design and development on daily wearing products with wearable technology, for example, glasses, gloves, watches, clothes, accessories, and shoes. The wearable device is a portable device that may be directly worn or integrated into clothes or accessories of a user. In addition to being a hardware device, the wearable device may also realize various functions through software support, data interaction, and cloud interaction. A wearable smart device in a broad sense includes, for example, a smart watch or smart glasses with complete functions and large sizes and capable of realizing independently all or part of functions of a smart phone, and for example, various types of smart bands and smart jewelries for physical monitoring, of which each is dedicated to application functions of a certain type and required to be used together with other devices such as a smart phone.

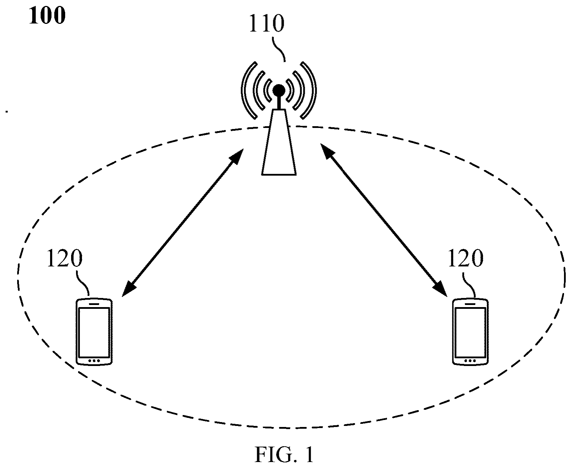

Exemplarily, FIG. 1 illustrates a communication system 100 to which embodiments of the present disclosure are applicable. The communication system 100 may include a network device 110. The network device 110 may be a device for communicating with a terminal device 120 (also referred to as "communication terminal" or "terminal"). The network device 110 can provide a communication coverage for a specific geographical area and communicate with terminal devices in the coverage area.

FIG. 1 exemplarily illustrates one network device and two terminal devices. Optionally, the communication system 100 may also include multiple network devices, and there may be other quantities of terminal devices in a coverage area of each of the network devices. Embodiments of the present disclosure are not limited in this regard.

Optionally, the communication system 100 may further include other network entities such as a network controller, a mobility management entity, or the like, and embodiments of the present disclosure are not limited in this regard.

It may be understood that, in embodiments of the present disclosure, a device with communication functions in a network/system may be referred to as "communication device". Taking the communication system 100 illustrated in FIG. 1 as an example, the communication device may include the network device 110 and the terminal device(s) 120 that have communication functions. The network device 110 and the terminal device(s) 120 can be the devices mentioned above and will not be repeated herein. The communication device may further include other devices such as a network controller, a mobility management entity, or other network entities in the communication system 100, and embodiments of the present disclosure are not limited in this regard.

It may be understood that, the terms "system" and "network" herein are usually used interchangeably throughout this disclosure. The term "and/or" herein only describes an association relationship between associated objects, which means that there may be three relationships. For example, A and/or B may mean A alone, both A and B exist, and B alone. In addition, the character "/" herein generally indicates that the associated objects are in an "or" relationship.

It may be understood that, "indication" referred to in embodiments of the present disclosure may be a direct indication, may be an indirect indication, or may mean that there is an association relationship. For example, A indicates B may mean that A directly indicates B, for instance, B may be obtained according to A; may mean that A indirectly indicates B, for instance, A indicates C, and B may be obtained according to C; or may mean that there is an association relationship between A and B.

In the elaboration of embodiments of the present disclosure, the term "correspondence" may mean that there is a direct or indirect correspondence between the two, may mean that there is an association between the two, or may mean a relationship of indicating and indicated or configuring and configured, etc.

In embodiments of the present disclosure, the "pre-defined" may be implemented by pre-saving a corresponding code or table in a device (for example, including the terminal device and the network device) or in other manners that can indicate related information, and the present disclosure is not limited in this regard. For example, the "pre-defined" may mean defined in a protocol.

In embodiments of the present disclosure, the "protocol" may refer to a communication standard protocol, which may include, for example, an LTE protocol, an NR protocol, and a protocol applicable to a future communication system, and the present disclosure is not limited in this regard.

In order to facilitate understanding of technical solutions of embodiments of the present disclosure, the related art of the present disclosure will be elaborated.

### I. Zero-power communication

Key technology for zero-power communication includes energy harvesting, backscatter communication, and low-power technology.

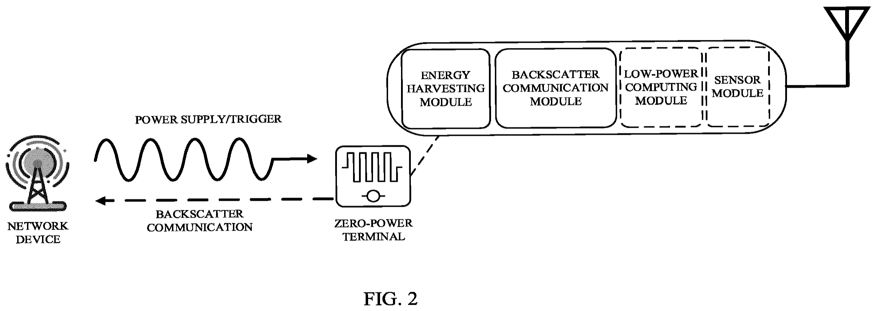

As illustrated in FIG. 2, a typical zero-power communication system (for example, a radio-frequency identity (RFID) system) includes a network device (for example, a reader in the RFID system) and a zero-power device (for example, a tag). The network device is configured to transmit a radio frequency (RF) power-supply signal and a downlink communication signal to the zero-power device and receive a backscattered signal from the zero-power device. A basic zero-power device includes an energy harvesting module, a backscattering module, and a low-power computing module. In addition, the zero-power device can further include a memory or a sensor configured to store some basic information (such as object identity) or sensor data, such as ambient temperature and ambient humidity.

For example, the energy harvesting module can harvest energy carried in a radio wave in space (a radio wave emitted by the network device is illustrated in FIG. 2), to drive the low-power computing module in the zero-power device and realize backscatter communication. After obtaining energy, the zero-power device can receive a control command from the network device and transmit data to the network device through backscattering based on control signaling. The data transmitted may be data stored in the zero-power device itself (e.g., an identity identifier or pre-written information, such as the date, brand, and manufacturer of a product). The zero-power device may also be equipped with various sensors, so as to report data collected by the sensors based on a zero-power mechanism.

Key technologies for zero-power communication will be elaborated below.

### 1. RF power harvesting

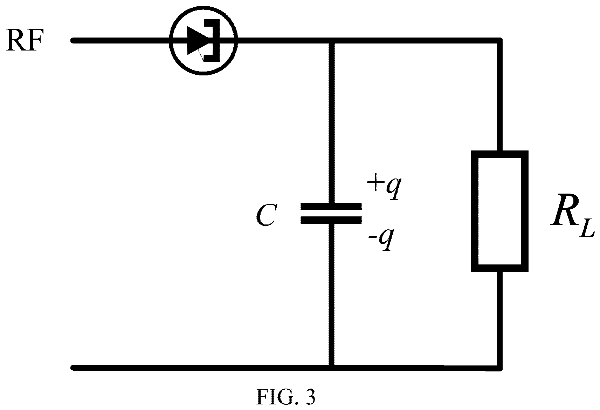

As illustrated in FIG. 3, an RF power harvesting module harvests power of a spatial electromagnetic wave through electromagnetic induction, to obtain power for driving a zero-power device, for example, driving a low-power demodulation and modulation module, driving a sensor, and reading a memory, etc. Therefore, a conventional battery is not needed for a zero-power device.

### 2. Backscatter communication

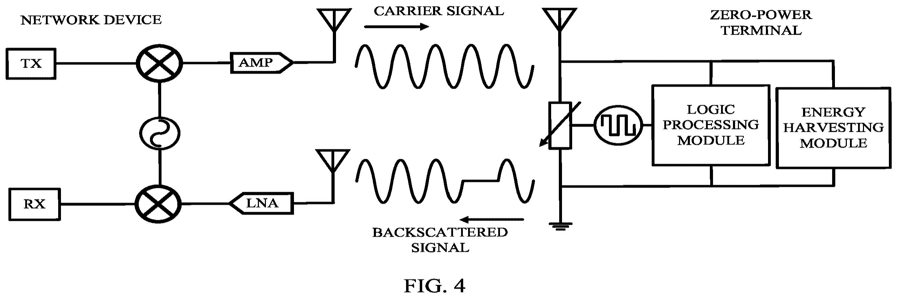

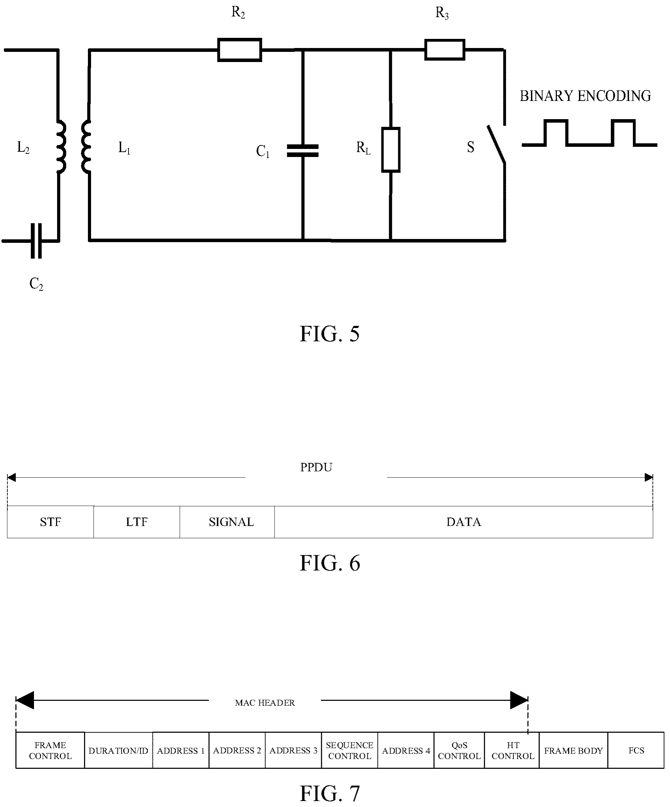

As illustrated in FIG. 4, a zero-power device receives a carrier signal sent by a network device, modulates the carrier signal, loads information to be sent, and radiates a modulated signal via an antenna. This procedure of information transmission is referred to as backscatter communication. Backscattering is closely related to load modulation. In load modulation, a circuit parameter(s) of an oscillation circuit of a zero-power device is adjusted and controlled according to the clock of a data stream, so that the magnitude and other parameters of the impedance of the zero-power device are changed accordingly, thus completing modulation. The load modulation technology mainly includes two schemes: resistance-based load modulation and capacitor-based load modulation. For resistance-based load modulation, a resistor is connected in parallel to a load, and the resistor is turned on or turned off under the control of a binary data stream, as illustrated in FIG. 5. The on and off of the resistor leads to change in circuit voltage to achieve amplitude-shift keying (ASK) modulation, i.e., signal modulation and transmission is achieved by adjusting the magnitude of a backscattered signal of a zero-power device. Similarly, for capacitor-based load modulation, a change in resonant frequency of a circuit can be achieved through the on and off of a capacitor, to achieve frequency-shift keying (FSK) modulation, i.e., signal modulation and transmission is achieved by adjusting an operating frequency of a backscattered signal of a zero-power device.

As can be seen, a zero-power device performs information modulation on a carrier signal by means of load modulation, so as to achieve backscatter communication. Therefore, a zero-power device has the following significant advantages: (1) there is no need to actively transmit a signal, and therefore, a complex RF circuit, such as a power amplifier (PA), an RF filter, etc., is not required; (2) there is no need to actively generate a high-frequency signal, and therefore, a high-frequency crystal oscillator is not required; and (3) by means of backscatter communication, a terminal does not need to consume energy of the terminal itself to transmit a signal.

### 3. Coding technologies

In data transmitted by a zero-power device, binary "1" and binary "0" may be expressed in different forms of codes. In an RFID system, one of the following coding methods are usually adopted: non-return to zero (NRZ) coding, Manchester coding, unipolar return to zero (RZ) coding, differential bi-phase (DBP) coding, differential coding, pulse interval encoding (PIE), bi-phase space coding (FM0), Miller coding, or differential coding. In general, in different coding technologies, different pulse signals are adopted to express 0 and 1.

In some scenarios, a zero-power device may be classified into the following types based on power sources and usage.

### 1. Passive zero-power device

For a zero-power device (for example, a tag in an RFID system), a built-in battery is not needed. When a zero-power device moves close to a network device (e.g., a reader in the RFID system), the zero-power device is within a near-field of antenna radiation of the network device. In this case, an antenna of the zero-power device generates an induced current through electromagnetic induction. The induced current drives a low-power chip circuit of the zero-power device to perform demodulation of a forward-link signal and modulation of a reverse-link (also referred to as backscatter-link) signal. For the backscatter link, the zero-power device performs signal transmission through backscattering.

It may be seen that, the passive zero-power device does not need a built-in battery to drive either the forward link or the reverse link, and therefore is truly a zero-power device.

The passive zero-power device does not need a battery and has a simple RF circuit and a simple baseband circuit. For example, the passive zero-power device does not need components such as a low-noise amplifier (LNA), a PA, a crystal oscillator, an analog-to-digital converter (ADC), and the like, and thus has advantages such as small size, light weight, low price, and long service life.

### 2. Semi-passive zero-power device

A semi-passive zero-power device is not equipped with a conventional battery, but can use an RF power harvesting module to harvest radio wave energy, and store the harvested energy in a power storage unit (e.g., a capacitor). After the power storage unit obtains energy, a low-power chip circuit of the zero-power device can be driven to perform demodulation of a forward-link signal and modulation of a reverse-link signal. For a backscatter link, the zero-power device performs signal transmission through backscattering.

It may be seen that, a semi-passive zero-power device does not need a built-in battery to drive either the forward link or the reverse link. Although the passive zero-power device utilizes energy stored in a capacitor during operation, since the energy comes from radio wave energy harvested by the power harvesting module, the passive zero-power device is truly a zero-power device.

The semi-passive zero-power device inherits many advantages of a passive zero-power device, and thus has advantages such as small size, light weight, low price, and long service life.

### 3. Active zero-power device

A zero-power device applied in some scenarios may also be referred to as an active zero-power device, and such a device can have a built-in battery. The battery is used to drive a low-power chip circuit of the zero-power device to perform demodulation of a forward-link signal and modulation of a reverse-link signal. However, for a backscatter link, the zero-power device performs signal transmission through backscattering. Therefore, the zero-power consumption of such a device mainly lies in that signal transmission on the reverse link does not require power of the terminal itself but is based on backscattering.

### II. Cellular passive IoT

With the wider application of the 5^{th}-generation (5G) in industry, there are more and more types and application scenarios of connections, and therefore, higher requirements are imposed on the cost and power consumption of a communication terminal. The application of a passive IoT device that is battery-free and low-cost becomes a key technology for a cellular IoT, which enriches the types and the number of terminals connected to a 5G network, thereby truly realizing universal interconnection. The passive IoT device can be based on zero-power communication technology, such as RFID technology, and is extended on the basis so as to be applicable to a cellular IoT.

In order to facilitate understanding of embodiments of the present disclosure, a power-supply signal, a scheduling signal, and a carrier signal involved in zero-power communication are elaborated.

### 1. Power-supply signal

The power-supply signal is an energy source for energy harvesting of the zero-power device.

With regard to a carrier of the power-supply signal, the carrier may be a base station, a smart phone, an intelligent gateway, a charging station, a micro base station, etc.

With regard to the frequency band, the frequency band of a radio wave for power supply may be a low frequency, an intermediate frequency, a high frequency, etc.

With regard to the waveform, a radio wave for power supply may be a sine wave, a square wave, a triangular wave, a pulse, a rectangular wave, etc.

In addition, the power-supply signal may be a continuous wave, or may be a discontinuous wave (i.e., time interruption is allowed).

Optionally, the power-supply signal may be an existing signal in the 3^{rd}-generation partnership project (3GPP) standard, such as a sounding reference signal (SRS), a physical uplink shared channel (PUSCH), a physical random access channel (PRACH), a physical uplink control channel (PUCCH), a physical downlink control channel (PDCCH), a physical downlink shared channel (PDSCH), a physical broadcast channel (PBCH), etc., or may be a WiFi signal or a Bluetooth signal.

Optionally, the power-supply signal may also be implemented by a new signal, for example, a new signal dedicated to power supply.

### 2. Trigger signal (or referred to as "scheduling signal")

The trigger signal is used to trigger or schedule the zero-power device to perform data transmission.

With regard to a carrier of the trigger signal, the carrier may be a base station, a smart phone, an intelligent gateway, etc.

With regard to the frequency band, a radio wave for triggering or scheduling may be a low frequency, an intermediate frequency, a high frequency, etc.

With regard to the waveform, a radio wave for triggering or scheduling may be a sine wave, a square wave, a triangular wave, a pulse, a rectangular wave, etc.

In addition, the trigger signal may be a continuous wave, or may be a discontinuous wave (i.e., time interruption is allowed).

Optionally, the trigger signal may be an existing signal in the 3GPP standard, such as an SRS, a PUSCH, a PRACH, a PUCCH, a PDCCH, a PDSCH, or a PBCH, or may be a WiFi signal or a Bluetooth signal.

Optionally, the trigger signal may be implemented by a new signal, for example, a new signal dedicated to triggering or scheduling.

### 3. Carrier signal

The carrier signal is used for the zero-power device to generate a backscattered signal. For example, the zero-power device can modulate a received carrier signal according to information to be sent, so as to form the backscattered signal.

With regard to a carrier of the carrier signal, the carrier may be a base station, a smart phone, an intelligent gateway, etc.

With regard to the frequency band, a radio wave acting as a carrier signal may be a low frequency, an intermediate frequency, a high frequency, etc.

With regard to the waveform, a radio wave acting as a carrier signal may be a sine wave, a square wave, a triangular wave, a pulse, a rectangular wave, etc.

In addition, the carrier signal may be a continuous wave, or may be a discontinuous wave (i.e., time interruption is allowed).

Optionally, the carrier signal may be an existing signal in the 3GPP standard, such as an SRS, a PUSCH, a PRACH, a PUCCH, a PDCCH, a PDSCH, a PBCH, or may be a WiFi signal or a Bluetooth signal, etc.

Optionally, the carrier signal may be implemented by a new signal, for example, a new carrier signal dedicated to generating a backscattered signal.

It may be noted that, in embodiments of the present disclosure, the power-supply signal, the scheduling signal, and the carrier signal may be the same signal, or may be different signals. For example, the power-supply signal may be used as a carrier signal, and the scheduling signal may also be used as a carrier signal.

In some scenarios, due to the battery-free and low-cost characteristics of a zero-power device, large-scale deployment and maintenance-free of a large number of zero-power devices can be supported in a communication system (such as an NR system, a WiFi system, etc.).

In some scenarios, an ambient power-based IoT device, such as an ambient power-enabled (AMP) IoT device (referred to as "ambient IoT device" or "AMP IoT device" for short), is considered to be supported in the communication system. The ambient IoT device may refer to an IoT device that utilizes various ambient energy, such as RF energy, light energy, solar energy, thermal energy, mechanical energy, etc. Such a device is similar to a passive device or a semi-passive device in zero-power communication.

In 802.11 technology, a Wi-Fi device performs information transmission based on a physical layer (PHY) protocol data unit (PPDU) frame. The PPDU frame contains a PHY header and a data part. As illustrated in FIG. 6, in 802.11a/g, a PHY header in a PPDU frame contains a short training field (STF), a long training field (LTF), and a signal (SIG) field. The STF is mainly composed of 10 short symbols (*t*1 to *t*10), and a length of each symbol is 0.8 us. Each symbol implements many functions, mainly including frame synchronization and coarse frequency synchronization. *t*1 to t7 mainly implement functions such as signal detection, automatic gain control (AGC), and diversity selection, and t8 to *t*10 mainly implement functions such as coarse frequency, offset estimation, and timing synchronization. The LTF is mainly used for implementing fine frequency synchronization and channel estimation. The SIG part carries information related to the data part, such as a data transmission rate, length information (*Length*) of a data packet, a reserved bit, and a tail bit.

The data part in a PPDU carries a medium access control (MAC) frame. As illustrated in FIG. 7, a frame format of the MAC frame may consist of the following parts: an MAC header, a frame body, and a frame check sequence (FCS). The frame body field is used for carrying information to be transmitted or received. The FCS field contains a 32-bit cyclic redundancy check (CRC) and is used for error detection.

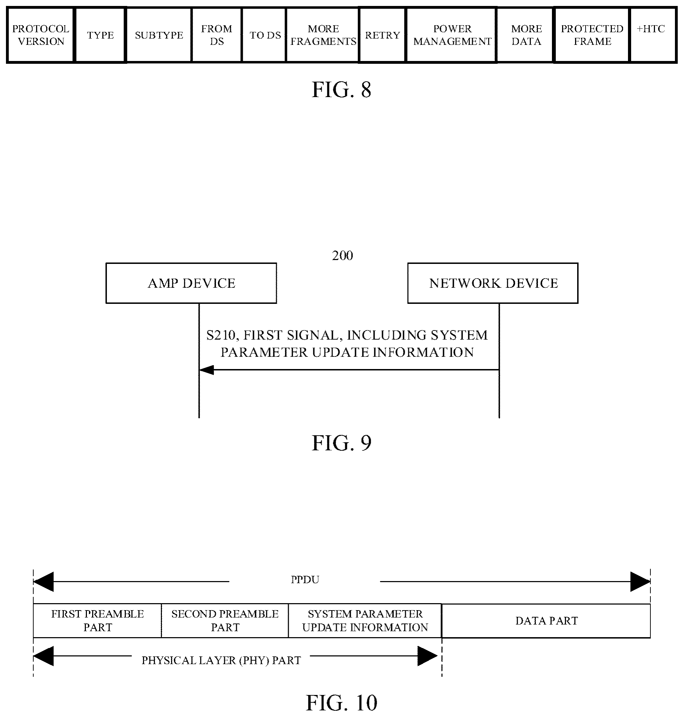

FIG. 8 illustrates a format of a frame control part in an MAC header. As illustrated in FIG. 8, the frame control part may contain the following information parts.
1. Protocol version: indicating a protocol version of a PPDU, for example, a value of the protocol version may be 0 or 1.
2. Type: indicating a frame type of a PPDU frame, for example, the frame type of the PPDU frame may be one of the following: a) a control frame: used for handshake communication and positive acknowledgement during contention, ending of a non-contention period, etc.; b) a management frame: used for controlling negotiation and a relationship between a station (STA) and an AP, such as association, authentication, synchronization, etc.; or c) a data frame: used for transmitting data in a contention period and a non-contention period.
3. Subtype: used for further determining a subtype of a frame type.
4. To DS: indicating whether a PPDU frame is a frame transmitted by a basic service set (BSS) to a distributed system (DS).
5. From DS: indicating whether a PPDU frame is a frame transmitted by a DS to a BSS.
6. More fragments: used for describing a case in which a long frame is fragmented and whether there is another frame. When there is another frame, a value of the more fragment is set to 1.
7. Retry: indicating that a fragment is a retransmitted frame of a previously transmitted fragment.
8. Power management: indicating a power management mode used by an STA after a frame is transmitted.
9. More data: indicating that various frames are buffered to an STA, i.e., when there is at least one data frame to be transmitted to an STA, a value of the more data is set to 1.
10. Protected frame: indicating that the frame body is encrypted according to an algorithm. When the frame body part contains data processed with a key, a value of the protected frame is set to 1, otherwise, the value of the protected frame is set to 0.
11. +high-throughput control (HTC): an indicator bit related to an HT control field.

A duration/ID field in the MAC header indicates a duration during which the PPDU frame and an acknowledgement frame for the PPDU frame will occupy a signal. A value of the duration/ID field is used for calculation of a network allocation vector (NAV).

An address field in the MAC header indicates the following information: a destination address (DA), a source address (SA), a transmitting address (TA), a receiving address (RA), and a basic service set identifier (BSSID).

A sequence control field in the MAC header: used for filtering out a duplicate frame.

A quality of service (QoS) control field in the MAC header: an MAC-layer field newly added in 802.11e, and is used for priority control. This field is available only when a data frame is of a QoS data subtype.

An HT control field in the MAC header: an MAC-layer field newly added in 802.11n. Starting from 802.11n, MAC supports a 40M bandwidth, that is, two original 20M bandwidths are combined into one 40M bandwidth. This field provides some control for high-throughput data. This field is available only when the PPDU frame is set to a high-throughput frame.

The energy required for the operation of a zero-power device mainly comes from the environment, such as using a wireless RF signal for power supply. Therefore, communication between a zero-power device and a network device is usually affected by the remaining battery level of the zero-power device, and thus the zero-power device is not suitable to receive information from the network device frequently. However, in a communication system, it is often necessary to periodically receive public control information delivered by the network device, such as a beacon frame in a WiFi system. This mechanism is difficult to implement for the zero-power device. As such, in the case where the zero-power device is introduced into the communication system, how to receive public control information is an urgent problem to be solved.

In order to facilitate understanding of technical solutions of embodiments of the present disclosure, the technical solutions of the present disclosure are elaborated below with reference to embodiments. The related art as an optional scheme can be arbitrarily combined with the technical solutions of embodiments of the present disclosure, which shall all belong to the protection scope of embodiments of the present disclosure. Embodiments of the present disclosure include at least some of the following.

FIG. 9 is a schematic diagram of a method 200 for wireless communication according to embodiments of the present disclosure. As illustrated in FIG. 9, the method 200 includes at least some of the following.

At S210, a network device transmits a first signal to an AMP device, where the first signal includes system parameter update information.

In some embodiments, the AMP device may also be referred to as a zero-power device, a battery-free device, a maintenance-free device, an ambient IoT device, or an AMP IoT device.

In some embodiments, the AMP device may be a type of device defined according to characteristics of the device, such as complexity, energy source, communication mode, and waveform.

In some embodiments, the AMP device may be a device that can perform communication based on ambient energy, for example, the AMP device can obtain energy for communication by utilizing RF energy, light energy, solar energy, thermal energy, mechanical energy, or other ambient energy. In this case, the AMP device may be a zero-power device or a low-power device.

In some other embodiments, the energy required for the operation of the AMP device may also come from power supply of the AMP device itself. In this case, the AMP device may be a low-power terminal.

In some embodiments, the AMP device may be a type of device with low complexity or adopting a new waveform, for example, performing communication with a low-order modulation scheme, a simple waveform, or a signal with a relatively narrow bandwidth.

In some embodiments, the AMP device may be a type of device to which backscatter communication is applicable.

In some embodiments, the network device may be a network device in a cellular communication system, such as a base station in an NR system, may be an AP in a WiFi system, or may be a node with management and control functions in other communication systems, which is not limited in the present disclosure.

In some embodiments, when the network device is an AP in a WiFi system, the AMP device is also referred to as "AMP STA".

In some embodiments, in a WiFi system, a system parameter may include BSS parameter update information. In some embodiments, an updated BSS parameter may be carried in a beacon frame, for example, carried in an element in a beacon frame.

In some embodiments, the first signal may be transmitted in a broadcast manner, or in other words, transmitted via a broadcast channel.

In some embodiments, the system parameter update information includes first indication information and/or second indication information. The first indication information is used for determining whether a system parameter update occurs, or whether a critical system parameter update occurs. The second indication information is used for determining an updated system parameter(s) or determining position information of the updated system parameter(s) in a second signal, and the second signal is used for carrying system parameter information.

Therefore, in embodiments of the present disclosure, the network device can indicate the system parameter update information to the AMP device, and the AMP device can receive a system parameter(s) according to the system parameter update information. For example, in the case where the first indication information indicates that no system parameter update occurs, the AMP device receives no system parameter, which is beneficial to the power saving of the AMP device. For another example, the AMP device may also determine the updated system parameter according to the second indication information. Further, the AMP device may only receive the updated system parameter, or only receive a system parameter at a corresponding position according to the position information of the updated system parameter. In this way, the complexity of the AMP device receiving a system parameter(s) can be reduced, and the power consumption of the AMP device can also be reduced.

In some embodiments, the first indication information may be 1 bit, and a value of the 1 bit indicates whether a system parameter update occurs. For example, the value being 1 indicates that a system parameter update occurs, and the value being 0 indicates that no system parameter update occurs.

In some embodiments, the network device determines a state indicated by the first indication information according to whether a system parameter update occurs within a period of time. For example, if no system parameter update occurs between the current time and a previous period of time, the first indication information indicates that no system parameter update occurs, otherwise, the first indication information indicates that a system parameter update occurs.

In some other embodiments, the first indication information may indicate a value of first information, and a change in the value of the first information is used for determining whether a system parameter update occurs. For example, when a change occurs to the value of the first information relative to a value of first information received last time, the AMP device determines that a system parameter update occurs, otherwise, the AMP device determines that no system parameter update occurs.

In some embodiments, in the case where an update (or a critical update) occurs to a system parameter(s), the network device adjusts the value of the first information.

For example, the first information may be system parameter update counter information. A system parameter update counter may be maintained by the network device. When a change occurs to a system parameter(s), the network device may increment a count value of the counter. When an update occurs to the count value of the counter, the network device may transmit the first signal to notify the AMP device that an update has occurred to a system parameter(s).

In some specific embodiments, the network device is an AP device, and the system parameter update counter may be a BSS parameter update counter indicating whether an update occurs to a BSS parameter, for example, whether an update occurs to a parameter in an element carrying the BSS parameter in a beacon frame.

In some embodiments, a system parameter may include at least one of the following: a channel switch-related system parameter, a power supply-related system parameter, or a backscattering-related system parameter.

In some embodiments, the channel switch-related system parameter may include at least one of the following: a channel switch announcement parameter or an extended channel switch announcement parameter.

In some embodiments, the power supply-related system parameter may include an RF channel parameter for power supply or an RF signal parameter for power supply.

In some embodiments, the backscattering-related system parameter may include a parameter related to a channel or signal of a carrier for backscattering.

In some embodiments, an update on a system parameter may include, but is not limited to, at least one of: an inclusion of a channel switch announcement element, an inclusion of an extended channel switch announcement element, an inclusion of an operating mode notification element, a modification to an RF power source parameter, or a modification to a carrier parameter.

In some embodiments, the second indication information indicates the updated system parameter (i.e., which system parameter is updated) or a type of the updated system parameter, such as a channel switch-related system parameter, a power supply-related system parameter, a backscattering-related system parameter, etc.

In some specific embodiments, the second indication information may be *N* bits, a different state of the *N* bits indicates that an update occurs to a different system parameter, and *N* is a positive integer. For example, the *N* bits may be 2 bits, and a value of the *N* bits being 00 indicates that no system parameter update occurs, the value being 01 indicates that an update occurs to a channel switch-related parameter, the value being 10 indicates that an update occurs to a power supply-related parameter, and the value being 11 indicates that an update occurs to a backscattering-related parameter.

In some other embodiments, the network device may also indicate, through bit mapping, whether an update occurs to each type of system parameter.

For example, the second indication information may be 3 bits, respectively corresponding to three types of system parameters, such as a channel switch-related system parameter, a power supply-related system parameter, and a backscattering-related system parameter. A value of each bit indicates whether an update occurs to a corresponding system parameter. For example, the value being 1 indicates that an update occurs to a corresponding system parameter, and the value being 0 indicates that no update occurs to a corresponding system parameter.

In some embodiments, the first signal is a first PPDU. For example, when the network device is an AP, the AP may carry the system parameter update information in the first PPDU.

It may be understood that, in embodiments of the present disclosure, the first PPDU may be implemented using the existing PPDU frame. For example, an information field is newly added into the existing PPDU frame to carry the system parameter update information, a reserved bit in the existing PPDU frame is used for the carrying system parameter update information, or a new PPDU frame may be defined for carrying the system parameter update information for the AMP device.

In some embodiments, the first PPDU may be a beacon frame, may be a null data PPDU (NDP), or may be another management frame, another control frame, or another data frame.

In some embodiments, the system parameter update information and the system parameter information may be carried in one signal, or may be carried in different signals.

For example, the second signal is a second PPDU, and the first PPDU and the second PPDU may be the same PPDU or may be different PPDUs.

The following describes a manner of carrying the system update information in the first PPDU in conjunction with specific embodiments.

Embodiment 1: the system parameter update information is carried in a PHY part in the first PPDU.

In some embodiments, a data part in the first PPDU is used for carrying a system parameter, or a system parameter may also be carried in another PPDU.

In the first PPDU, the PHY part is positioned before the data part, that is, the system parameter update information is positioned before the data part. Therefore, the AMP device can obtain the system parameter update information by receiving the PHY part in the first PPDU. Further, the AMP device may determine, according to the system parameter update information, whether to receive a system parameter. For example, when the first indication information indicates that no system parameter update occurs, the AMP device receives no system parameter, in this case, if a system parameter is carried in the data part in the first PPDU, the AMP device does not receive data in the first PPDU; or if a data parameter is carried in another PPDU, the AMP device does not receive the other PPDU.

It may be understood that, in embodiments of the present disclosure, the network device may carry the system parameter update information in a reserved bit in the PHY part in the first PPDU, or may newly add an information field into the PHY part in the first PPDU to carry the system parameter update information, which is not limited in the present disclosure. In combination with specific examples, the following illustrates a specific manner of carrying the system parameter update information in the PHY part, which is not limited in the present disclosure.

Embodiment 1-1: the PHY part in the first PPDU contains a first preamble part, a second preamble part, and a system parameter update information part, where the first preamble part is used for carrying preamble information of a non-AMP device, the second preamble part is used for carrying preamble information of an AMP device, and the system parameter update information part is used for carrying system parameter update information.

In some embodiments, in the PHY part in the first PPDU, the first preamble part is positioned before the second preamble part, and the system parameter update information is positioned after the second preamble part.

FIG. 10 illustrates a schematic diagram of a format of a first PPDU provided in embodiments of the present disclosure. As illustrated in FIG. 10, a PHY part in the first PPDU may contain a first preamble part, a second preamble part, and system parameter update information. The first preamble part corresponds to a non-AMP device (e.g., an STA), and the second preamble part corresponds to an AMP device. The first preamble part may be used for synchronization and channel estimation of a non-AMP device, and the second preamble part may be used for synchronization of an AMP device.

In some embodiments, the first preamble part may contain at least one of an STF part, an LTF part, or an SIG part.

In some embodiments, the second preamble part may also contain at least one of an STF part, an LTF part, or an SIG part.

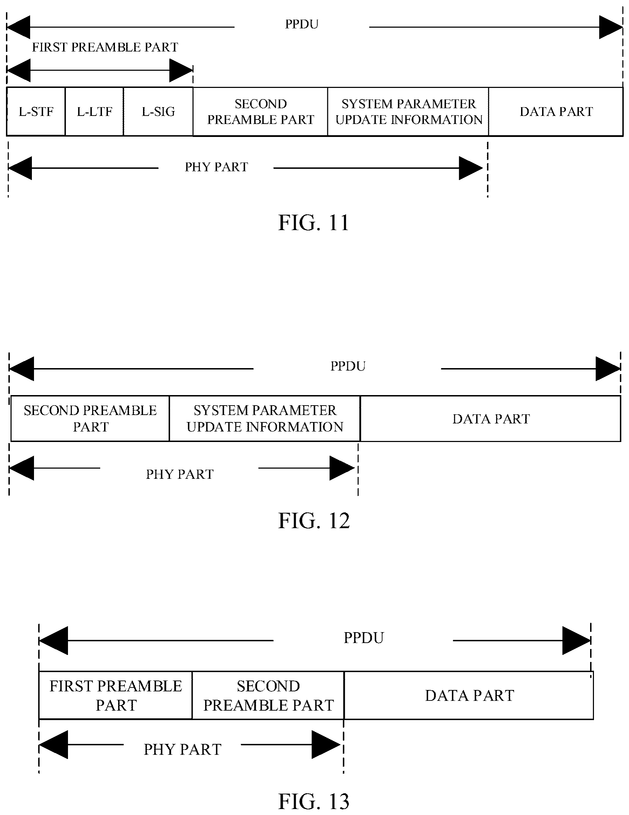

In some embodiments, the first preamble part is also referred to as "legacy preamble part", and the second preamble part is also referred to as "AMP preamble part". In the legacy preamble part, the STF part is also referred to as "legacy STF (L-STF) part", the LTF part is also referred to as "legacy LTF (L-LTF) part", and the SIG part is also referred to as "legacy SIG (L-SIG) part". Similarly, the SIG part in the second preamble part is also referred to as "AMP-SIG part". FIG. 11 illustrates a schematic diagram of a format of a first preamble part provided in embodiments of the present disclosure.

In some embodiments, the first preamble part is transmitted via a traditional 802.11 wireless air interface, and the second preamble part and the system parameter update information are transmitted via an AMP wireless air interface. The AMP wireless air interface is also referred to as "zero-power wireless air interface", and the AMP wireless air interface may refer to an interface for communication between a network device and an AMP device.

In some embodiments, the system parameter update information part indicates BSS parameter update counter information. In this case, the system parameter update information part is also referred to as "BSS parameter update counter part".

In some embodiments, when the data part in the first PPDU is used for carrying information to be transmitted to an AMP device, the data part is also referred to as "AMP data part".

In some embodiments, the data part in the first PPDU is used for carrying system parameter information for an AMP device, or system parameter information for an AMP device may also be carried in another PPDU. As such, the AMP device may determine, according to the system parameter update information in the PHY part in the first PPDU, whether to receive the data part in the first PPDU or whether to receive another PPDU.

For example, the first PPDU is a beacon frame, and the beacon frame is used for carrying system parameter information for an AMP device. As such, the AMP device may determine, according to a PHY part in the beacon frame, whether a system parameter update occurs, and further determine whether to receive system parameter information carried in a data part in the beacon frame.

Embodiment 1-2: the PHY part in the first PPDU contains a second preamble part and a system parameter update information part, where the second preamble part is used for carrying preamble information of an AMP device.

In this case, the first PPDU is referred to as "AMP PPDU", for example, a PPDU specifically defined for an AMP device for carrying system parameter update information for the AMP device.

In some embodiments, the system parameter update information part is positioned between the second preamble part and the data part in the first PPDU.

In some embodiments, the second preamble part may also contain at least one of an STF part, an LTF part, or an SIG part.

FIG. 12 illustrates a schematic diagram of yet another format of a first PPDU provided in embodiments of the present disclosure. As illustrated in FIG. 12, a PHY part in the first PPDU may contain a second preamble part and a system parameter update part, and the system parameter update information part is positioned after the second preamble part.

In some embodiments, the first PPDU is transmitted via an AMP wireless air interface. The AMP wireless air interface is also referred to as "zero-power wireless air interface", and the AMP wireless air interface may refer to an interface for communication between a network device and an AMP device.

In some embodiments, the system parameter update information part indicates BSS parameter update counter information. In this case, the system parameter update information part is also referred to as "BSS parameter update counter part".

In some embodiments, the second preamble part is also referred to as "AMP preamble part", and the data part in the first PPDU is also referred to as "AMP data part".

In some embodiments, the data part in the first PPDU is used for carrying system parameter information, or system parameter information may also be carried in another PPDU. As such, the AMP device may determine, according to the system parameter update information in the PHY part in the first PPDU, whether to receive the data part in the first PPDU or whether to receive another PPDU.

For example, the first PPDU is a beacon frame, and the beacon frame is used for carrying system parameter information for an AMP device. As such, the AMP device may determine, according to a PHY part in the beacon frame, whether an update occurs to a system parameter for the AMP device, and further determine whether to receive system parameter information carried in a data part in the beacon frame.

Embodiment 1-3: the PHY part in the first PPDU contains a first preamble part and a second preamble part, where the first preamble part is used for carrying preamble information of a non-AMP device, the second preamble part is used for carrying preamble information of an AMP device, and the second preamble part further indicates system parameter update information. For example, the second preamble part may explicitly or implicitly indicate system parameter update information.

In Embodiment 1-3, for a specific implementation of the first preamble part, reference may be made to related illustrations in Embodiment 1-1, which will not be repeated herein for the sake of brevity.

In some embodiments, the second preamble part may also contain at least one of an STF part, an LTF part, or an SIG part.

In some embodiments, the system parameter update information is carried in the second preamble part.

For example, the second preamble part contains an SIG (denoted as AMP-SIG) part, and system parameter update information is carried in the AMP-SIG part.

In some other embodiments, the second preamble part implicitly indicates system parameter update information.

For example, the second preamble part is represented by a sequence, and different sequences respectively indicate different system parameter update information.

For example, multiple sequences may be respectively defined to indicate different system parameter update information, and the multiple sequences may be of equal length or unequal length. For example, when system parameter update information is 1-bit information, two sequences are used to indicate whether an update occurs to a system parameter.

FIG. 13 illustrates a schematic diagram of yet another format of a first PPDU provided in embodiments of the present disclosure. As illustrated in FIG. 13, a PHY part in the first PPDU may contain a first preamble part and a second preamble part. The second preamble part contains a system parameter update information part, or the second preamble part indicates system parameter update information.

Embodiment 1-4: the PHY part in the first PPDU contains a second preamble part, where the second preamble part is used for carrying preamble information of an AMP device, and the second preamble part further indicates system parameter update information.

In Embodiment 1-4, for a specific implementation of the second preamble part, reference may be made to related illustrations of the second preamble part in FIG. 1-3, which will not be repeated herein for the sake of brevity.

In Embodiment 1-4, the first PPDU is referred to as "AMP PPDU", for example, a PPDU specifically defined for an AMP device for indicating system parameter update information for the AMP device.

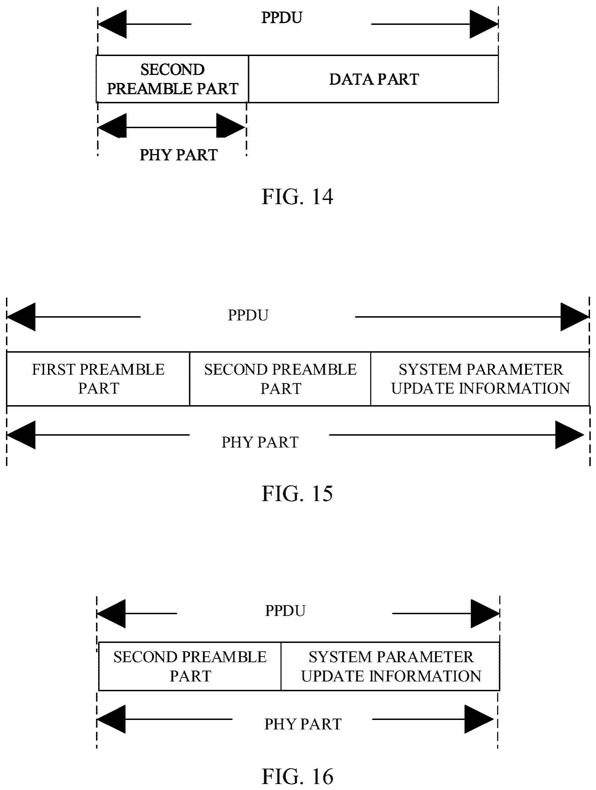

FIG. 14 illustrates a schematic diagram of yet another format of a first PPDU provided in embodiments of the present disclosure. As illustrated in FIG. 14, a PHY part in the first PPDU may contain a second preamble part, and the second preamble part contains a system parameter update information part, or the second preamble part indicates system parameter update information.

It may be understood that, in the examples of FIG. 10 to FIG. 14, the first PPDU contains a data part. In some other embodiments, the first PPDU may not contain a data part, for example, the first PPDU is an NDP frame. FIG. 15 to FIG. 18 each illustrates a schematic diagram of a format of a frame carrying system parameter update information in an NDP frame, and for meanings of various parts in FIG. 15 to FIG. 18, reference may be made to the meanings of the corresponding parts in FIG. 10 to FIG. 14, which are not repeated herein for the sake of brevity.

Embodiment 2: system parameter update information is carried in a data part in the first PPDU.

In some embodiments, the AMP device may receive a system parameter according to the system parameter update information in the first PPDU, where receiving system parameter update information is more power-saving than receiving a system parameter.

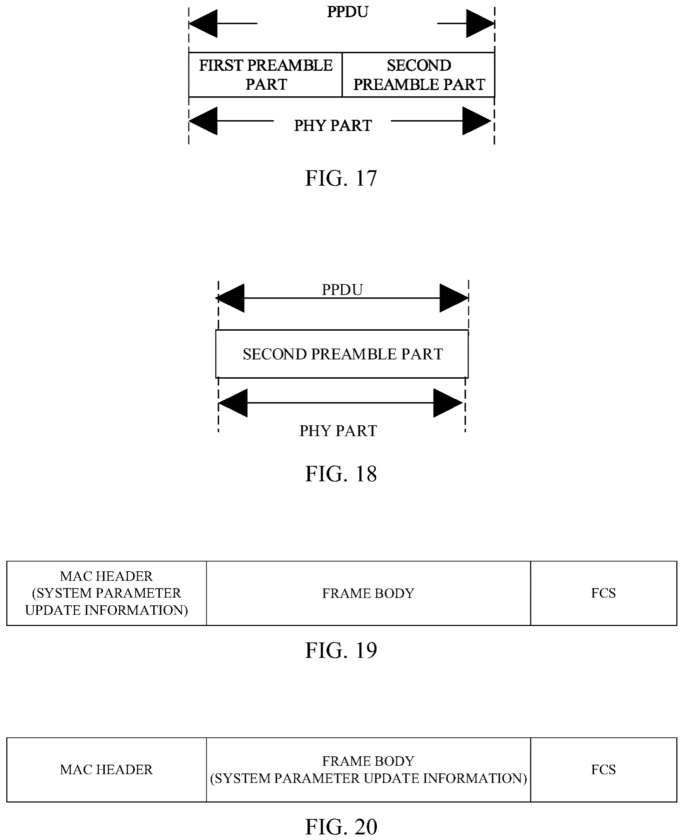

In some embodiments, the first PPDU may be a frame that needs to be received during communication between an AMP device and an AP, for example, a broadcast or unicast PPDU frame(s), specifically, an NDP frame(s), a data frame(s), or a management frame(s). As such, in the case where the AMP device needs to receive such a frame, the network device may carry the system parameter update information in a data part in the frame. For example, the system parameter update information may be carried as an element or a field in a frame body in the frame, or may be carried as an element or field in an MAC header part. FIG. 19 and FIG. 20 each illustrates a schematic diagram of a format of a first PPDU carrying system parameter update information in an MAC header and in an MAC frame body.

In some embodiments, the system parameter update information is carried in a specific position in the data part in the first PPDU. In this way, the AMP device can obtain the system parameter update information by obtaining information of the specific position rather than all information in the data part, which is beneficial to the power saving of the AMP device.

For example, the system parameter update information is carried in first *N* elements or first *N* fields in the data part in the first PPDU, where *N* is a positive integer. As such, the AMP device can obtain the system parameter update information by receiving information in the first *N* elements or the first *N* fields in the data part in the first PPDU, and further receive a system parameter(s) according to the system parameter update information. For example, in the case where the first indication information indicates that no system parameter update occurs, the AMP device receives no system parameter, which is beneficial to the power saving of the AMP device. For another example, the AMP device may also determine the updated system parameter according to the second indication information. Further, the AMP device may only receive the updated system parameter, or only receive a system parameter at a corresponding position according to the position information of the updated system parameter. In this way, the complexity of the AMP device receiving a system parameter can be reduced, and the power consumption of the AMP device can also be reduced.

In some embodiments of the present disclosure, the method 200 further includes the following. The network device transmits the second signal to the AMP device, where the second signal is used for carrying the system parameter information.

Correspondingly, the AMP device receives the second signal according to the system parameter update information.

In some embodiments, the second signal and the first signal are a same signal.

For example, the first signal is a first PPDU, the second signal is a second PPDU, the first PPDU and the second PPDU are a same PPDU, the system parameter update information is carried in a PHY part in a PPDU, and the system parameter information is carried in a data part in the PPDU. As such, when the AMP device receives a PHY part in the first PPDU and then determines that no system parameter update occurs, the AMP device may not receive a data part in the first PPDU, which is beneficial to the power saving of the AMP device.

In some embodiments, the second signal and the first signal are different signals.

For example, the first signal is a first PPDU, the second signal is a second PPDU, the first PPDU and the second PPDU are different PPDUs, the system parameter update information is carried in a PHY part or a data part in the first PPDU, and the system parameter information is carried in a data part in the second PPDU. As such, when the AMP device receives the PHY part in the first PPDU and then determines that no system parameter update occurs, the AMP device may not receive the second PPDU, which is beneficial to the power saving of the AMP device.

In some embodiments, the system parameter information is carried in first *M* elements or first *M* fields in a data part in the second signal, where *M* is a positive integer. For example, the system parameter information is carried in first *M* elements or first *M* fields in the data part in the second PPDU. Therefore, the AMP device can obtain the system parameter information by obtaining information in the first *M* elements or the first *M* fields in the data part in the second PPDU rather than all elements or fields in the data part, which is beneficial to the power saving of the AMP device.

In some embodiments, the system parameter information includes only an updated configuration of an updated system parameter, that is, the second signal carries only the updated configuration of the updated system parameter.

For example, when the system parameter update information indicates that a system parameter update occurs, the second signal includes only the updated configuration of the updated system parameter. Therefore, the AMP device only needs to receive the configuration of the updated system parameter, rather than configurations of all system parameters, which is beneficial to the power saving of the AMP device.

In some embodiments, the system parameter information includes the configurations of all the system parameters, that is, the second signal carries the configurations of all the system parameters.

Optionally, in this case, the system parameter update information may include the second indication information, and the second indication information indicates the updated system parameter or position information of the updated system parameter.

In some cases, in the data part in the second signal, a position of a system parameter is fixed, and the AMP device and the network device have a consistent understanding of the position. As such, when the second indication information indicates the updated system parameter, the AMP device can only receive information in a position of the updated system parameter, which is beneficial to the power saving of the AMP device.

In other cases, in the data part in the second signal, a position of a system parameter is variable. When the second indication information indicates the position information of the updated system parameter, the AMP device can only receive the information in the position, which is beneficial to the power saving of the AMP device.

In some embodiments, when the second PPDU includes the configurations of all the system parameters, the configuration of the updated system parameter among all the system parameters is carried in the first *M* elements or the first *M* fields in the data part in the second PPDU, where *M* is a positive integer.

Therefore, the AMP device can obtain updated system parameter information only by receiving information in the first *M* elements or the first *M* fields in the data part in the second PPDU, which is beneficial to the power saving of the AMP device.

In some embodiments, some second signals transmitted by the network device include only updated system parameter information, and other second signals include all the system parameter information. The AMP device may determine to receive which type of second signal according to the system parameter update information. For example, when a system parameter update occurs, the AMP device receives a second signal that only carries updated system parameter information; otherwise, the AMP device does not receive any second signal. For an AMP device that newly accesses the system, the AMP device needs to receive a second signal that carries all the system parameter information first.

In summary, in embodiments of the present disclosure, the network device can indicate the system parameter update information to the AMP device, and the AMP device can receive a system parameter(s) according to the system parameter update information. For example, in the case where the first indication information indicates that no system parameter update occurs, the AMP device does not receive any system parameter, which is beneficial to the power saving of the AMP device. For another example, the AMP device may also determine the updated system parameter according to the second indication information. Further, the AMP device may only receive the updated system parameter, or only receive a system parameter at a corresponding position according to the position information of the updated system parameter. In this way, the complexity of the AMP device receiving a system parameter can be reduced, and the power consumption of the AMP device can also be reduced.

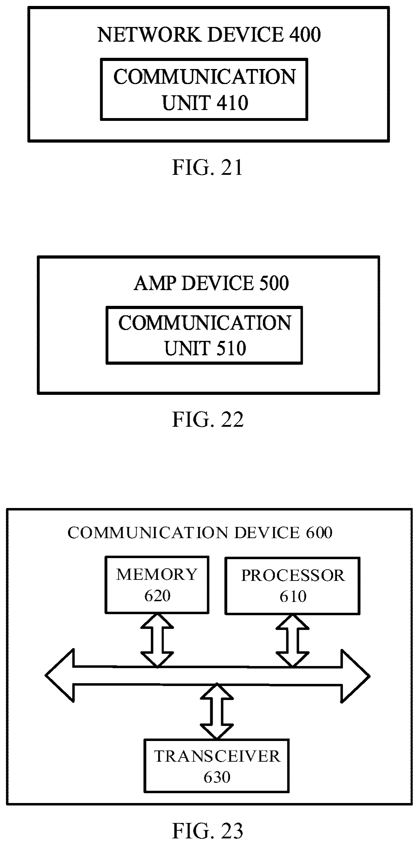

The method embodiments of the present disclosure are elaborated above with reference to FIG. 9 to FIG. 20, and apparatus embodiments of the present disclosure will be elaborated below with reference to FIG. 21 to FIG. 25. It may be understood that, apparatus embodiments and method embodiments correspond to each other. For similar elaborations, reference may be made to the method embodiments.

FIG. 21 illustrates a schematic block diagram of a network device 400 according to embodiments of the present disclosure. As illustrated in FIG. 21, the network device 400 includes a communication unit 410. The communication unit 410 is configured to transmit a first signal to an AMP device, where the first signal contains system parameter update information.

In some embodiments, the system parameter update information includes first indication information and/or second indication information, the first indication information is used for determining whether a system parameter update occurs, the second indication information is used for determining an updated system parameter or position information of the updated system parameter in a second signal, and the second signal is used for carrying system parameter information.

In some embodiments, the network device is an AP device.

In some embodiments, the system parameter update information includes BSS parameter update information.

In some embodiments, the BSS parameter update information includes a count value of a BSS parameter update counter.

In some embodiments, the first signal is a first PPDU.

In some embodiments, the system parameter update information is carried in a PHY part in the first PPDU.

In some embodiments, the PHY part in the first PPDU contains a first preamble part, a second preamble part, and the system parameter update information, where the first preamble part is used for carrying preamble information of a non-AMP device, and the second preamble part is used for carrying preamble information of an AMP device.

In some embodiments, the PHY part in the first PPDU contains a second preamble part and the system parameter update information, where the second preamble part is used for carrying preamble information of an AMP device.

In some embodiments, the system parameter update information is positioned between the second preamble part and a data part in the PPDU.

In some embodiments, the PHY part in the first PPDU contains a first preamble part and a second preamble part, where the first preamble part is used for carrying preamble information of a non-AMP device, the second preamble part is used for carrying preamble information of an AMP device, and the second preamble part further indicates the system parameter update information.

In some embodiments, the PHY part in the first PPDU contains a second preamble part, where the second preamble part is used for carrying preamble information of an AMP device, and the second preamble part further indicates the system parameter update information.

In some embodiments, the second preamble part is represented by a sequence, and different sequences respectively indicate different system parameter update information.

In some embodiments, the system parameter update information is carried in the second preamble part.

In some embodiments, the second preamble part contains a signal part, and the system parameter update information is carried in the signal part.

In some embodiments, the first PPDU further contains a data part.

In some embodiments, the first PPDU is a beacon frame.

In some embodiments, the first PPDU is an NDP.

In some embodiments, the system parameter update information is carried in the data part in the first PPDU.

In some embodiments, the system parameter update information is carried in a specific position in the data part in the first PPDU.

In some embodiments, the system parameter update information is carried in first *N* elements or first *N* fields in the data part in the first PPDU, where *N* is a positive integer.

In some embodiments, the communication unit 410 is further configured to transmit the second signal to the AMP device, where the second signal is used for carrying the system parameter information.

In some embodiments, the system parameter information includes only an updated configuration of the updated system parameter, or includes configurations of all system parameters.

In some embodiments, the second signal is a second PPDU, and the system parameter information is carried in a data part in the second PPDU.

In some embodiments, the data part in the second PPDU includes the configurations of all the system parameters, where a configuration of the updated system parameter among all the system parameters is carried in first *M* elements or first *M* fields in the data part in the second PPDU, where *M* is a positive integer.

Optionally, in some embodiments, the communication unit can be a communication interface or a transceiver, or an input/output interface of a communication chip or a system on a chip (SOC). The processing unit can be one or more processors.

It may be understood that, the network device 400 according to embodiments of the present disclosure can correspond to the network device in the method embodiments of the present disclosure, and the foregoing and other operations and/or functions of various units in the network device 400 are respectively intended for implementing corresponding procedures of the network devices in the method illustrated in FIG. 9 to FIG. 20, which are not repeated herein for brevity.

FIG. 22 illustrates a schematic block diagram of an AMP device 500 according to embodiments of the present disclosure. As illustrated in FIG. 22, the network device 500 includes a communication unit 510. The communication unit 510 is configured to receive a first signal transmitted by a network device, where the first signal contains system parameter update information.

In some embodiments, the system parameter update information includes first indication information and/or second indication information, the first indication information is used for determining whether a system parameter update occurs, the second indication information is used for determining an updated system parameter or position information of the updated system parameter in a second signal, and the second signal is used for carrying system parameter information.

In some embodiments, the network device is an AP device.

In some embodiments, the system parameter update information includes BSS parameter update information.

In some embodiments, the BSS parameter update information includes a count value of a BSS parameter update counter.

In some embodiments, the first signal is a first PPDU.

In some embodiments, the system parameter update information is carried in a PHY part in the first PPDU.

In some embodiments, the PHY part in the first PPDU contains a first preamble part, a second preamble part, and system parameter update information, where the first preamble part is used for carrying preamble information of a non-AMP device, and the second preamble part is used for carrying preamble information of an AMP device.

In some embodiments, the PHY part in the first PPDU contains a second preamble part and system parameter update information, where the second preamble part is used for carrying preamble information of an AMP device.

In some embodiments, the system parameter update information is positioned between the second preamble part and a data part in the PPDU.

In some embodiments, the PHY part in the first PPDU contains a first preamble part and a second preamble part, where the first preamble part is used for carrying preamble information of a non-AMP device, the second preamble part is used for carrying preamble information of an AMP device, and the second preamble part further indicates the system parameter update information.

In some embodiments, the PHY part in the first PPDU contains a second preamble part, where the second preamble part is used for carrying preamble information of an AMP device, and the second preamble part further indicates the system parameter update information.

In some embodiments, the second preamble part is represented by a sequence, and different sequences respectively indicate different system parameter update information.

In some embodiments, the system parameter update information is carried in the second preamble part.

In some embodiments, the second preamble part contains a signal part, and the system parameter update information is carried in the signal part.

In some embodiments, the first PPDU further contains a data part.

In some embodiments, the first PPDU is a beacon frame.

In some embodiments, the first PPDU is an NDP.

In some embodiments, the system parameter update information is carried in the data part in the first PPDU.

In some embodiments, the system parameter update information is carried in a specific position in the data part in the first PPDU.

In some embodiments, the system parameter update information is carried in first *N* elements or first *N* fields in the data part in the first PPDU, where *N* is a positive integer.

In some embodiments, the communication unit 510 is further configured to receive, in a case where a system parameter update occurs, the second signal transmitted by the network device, or obtain updated system parameter information from a data part in the first signal, where the second signal is used for carrying system parameter information.

In some embodiments, the system parameter information includes only an updated configuration of the updated system parameter, or includes configurations of all system parameters.

In some embodiments, the second signal is a second PPDU, and the system parameter information is carried in a data part in the second PPDU.

In some embodiments, the data part in the second PPDU includes the configurations of all the system parameters, where a configuration of the updated system parameter among all the system parameters is carried in first *M* elements or first *M* fields in the data part in the second PPDU, where *M* is a positive integer.

Optionally, in some embodiments, the communication unit may be a communication interface or a transceiver, or an input/output interface of a communication chip or an SOC. The processing unit may be one or more processors.

It may be understood that, the AMP device 500 according to embodiments of the present disclosure can correspond to the AMP device in the method embodiments of the present disclosure, and the foregoing and other operations and/or functions of various units in the AMP device 500 are respectively intended to implement corresponding procedures of the AMP device in the method illustrated in FIG. 9 to FIG. 20, which are not repeated herein for brevity.

FIG. 23 is a schematic structural diagram of a communication device 600 provided in embodiments of the present disclosure. The communication device 600 illustrated in FIG. 23 includes a processor 610. The processor 610 can invoke and execute a computer program stored in a memory, to implement the method in embodiments of the present disclosure.

Optionally, as illustrated in FIG. 23, the communication device 600 may further include a memory 620, where the processor 610 can invoke and execute a computer program stored in the memory 620 to implement the method in embodiments of the present disclosure.

The memory 620 may be a separate device independent of the processor 610, or may be integrated into the processor 610.

Optionally, as illustrated in FIG. 23, the communication device 600 may further include a transceiver 630. The processor 610 can control the transceiver 630 to communicate with other devices, and specifically, to send information or data to other devices or receive information or data sent by other devices.

The transceiver 630 may include a transmitter and a receiver. The transceiver 630 can further include an antenna, where one or more antennas may be provided.

Optionally, the communication device 600 may specifically be a network device in embodiments of the present disclosure, and the communication device 600 may implement corresponding operations implemented by the network device in various methods in embodiments of the present disclosure, which will not be repeated herein for the sake of brevity.

Optionally, the communication device 600 may specifically be an AMP device in embodiments of the present disclosure, and the communication device 600 may implement corresponding operations implemented by the AMP device in various methods in embodiments of the present disclosure, which will not be repeated herein for the sake of brevity.

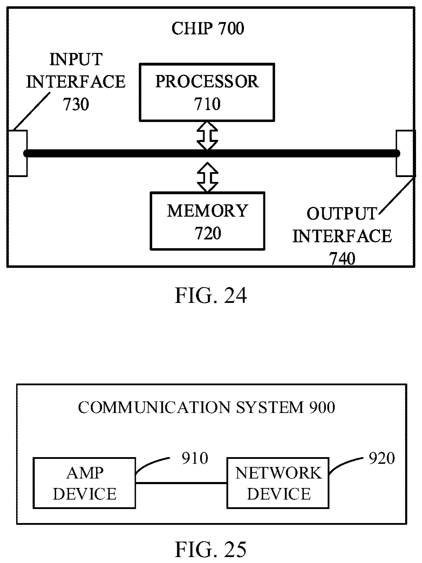

FIG. 24 is a schematic structural diagram of a chip according to embodiments of the present disclosure. The chip 700 illustrated in FIG. 24 includes a processor 710. The processor 710 can invoke and execute a computer program stored in a memory, to implement the method in embodiments of the present disclosure.

Optionally, as illustrated in FIG. 24, the chip 700 may further include a memory 720. The processor 710 can invoke and execute a computer program stored in the memory 720, to implement the method in embodiments of the present disclosure.

The memory 720 may be a separate device independent of the processor 710, or may be integrated into the processor 710.

Optionally, the chip 700 may further include an input interface 730. The processor 710 can control the input interface 730 to communicate with other devices or chips, and specifically, to obtain information or data sent by other devices or chips.

Optionally, the chip 700 may further include an output interface 740. The processor 710 can control the output interface 740 to communicate with other devices or chips, and specifically, to output information or data to other devices or chips.

Optionally, the chip is applicable to the network device in embodiments of the present disclosure, and the chip may implement corresponding operations implemented by the network device in various methods in embodiments of the present disclosure, which will not be repeated herein for the sake of brevity.

Optionally, the chip is applicable to the mobile terminal/terminal device in embodiments of the present disclosure, and the chip may implement corresponding operations implemented by the mobile terminal/terminal device in various methods in embodiments of the present disclosure, which will not be repeated herein for the sake of brevity.

Optionally, the chip in embodiments of the present disclosure may also be an SOC.

FIG. 25 is a schematic block diagram of a communication system 900 provided in embodiments of the present disclosure. As illustrated in FIG. 25, the communication system 900 includes an AMP device 910 and a network device 920.

The terminal device 910 can be configured to implement corresponding functions implemented by the terminal device in the foregoing method, and the network device 920 can be configured to implement corresponding functions implemented by the network device in the foregoing method, which are not repeated herein for the sake of brevity.

It may be understood that, the processor in embodiments of the present disclosure may be an integrated circuit chip with signal processing capabilities. During implementation, each step of the foregoing method embodiments may be completed by an integrated logic circuit of hardware in the processor or an instruction in the form of software. The processor may be a general-purpose processor, a digital signal processor (DSP), an application-specific integrated circuit (ASIC), a field programmable gate array (FPGA), or other programmable logic devices, discrete gates or transistor logic devices, or discrete hardware components. The methods, steps, and logic blocks disclosed in embodiments of the present disclosure can be implemented or executed. The general-purpose processor may be a microprocessor, or the processor may be any conventional processor or the like. The steps of the method disclosed in embodiments of the present disclosure may be directly implemented by a hardware decoding processor, or may be performed by hardware and software modules in the decoding processor. The software module can be located in a storage medium such as a random access memory (RAM), a flash memory, a read-only memory (ROM), a programmable ROM (PROM), or an electrically erasable programmable memory, registers, and the like. The storage medium is located in the memory. The processor reads the information in the memory, and completes the steps of the method mentioned above with the hardware thereof.

It may be understood that, the memory in embodiments of the present disclosure may be a volatile memory or a non-volatile memory, or may include both the volatile memory and the non-volatile memory. The non-volatile memory may be a ROM, a PROM, an erasable PROM (EPROM), an electrically EPROM (EEPROM), or flash memory. The volatile memory can be a RAM that acts as an external cache. By way of example but not limitation, many forms of RAM are available, such as a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM), and a direct rambus RAM (DR RAM). It may be noted that, the memory of the systems and methods mentioned in the present disclosure is intended to include, but is not limited to, these and any other suitable types of memory.

It may be understood that, the memory above is intended for illustration rather than limitation. For example, the memory in embodiments of the present disclosure may also be an SRAM, a DRAM, an SDRAM, a DDR SDRAM, an ESDRAM, an SLDRAM, a DR RAM, etc. In other words, the memory in embodiments of the present disclosure is intended to include, but is not limited to, these and any other suitable types of memory.

Embodiments of the present disclosure further provide a computer-readable storage medium. The computer-readable storage medium is configured to store a computer program.

Optionally, the computer-readable storage medium is applicable to the network device in embodiments of the present disclosure, and the computer program is operable with a computer to execute corresponding operations implemented by the network device in various methods in embodiments of the present disclosure, which will not be repeated herein for the sake of brevity.

Optionally, the computer-readable storage medium is applicable to an AMP device in embodiments of the present disclosure, and the computer program is operable with a computer to execute corresponding operations implemented by the AMP device in various methods in embodiments of the present disclosure, which will not be repeated herein for the sake of brevity.

Embodiments of the present disclosure further provide a computer program product. The computer program product includes computer program instructions.

Optionally, the computer program product is applicable to the network device in embodiments of the present disclosure, and the computer program instructions are operable with a computer to execute corresponding operations implemented by the network device in various methods in embodiments of the present disclosure, which will not be repeated herein for the sake of brevity.

Optionally, the computer program product is applicable to an AMP device in embodiments of the present disclosure, and the computer program instructions are operable with a computer to execute corresponding operations implemented by the AMP device in various methods in embodiments of the present disclosure, which will not be repeated herein for the sake of brevity.

Embodiments of the present disclosure further provide a computer program.

Optionally, the computer program is applicable to the network device in embodiments of the present disclosure. The computer program, when executed by a computer, is operable to implement corresponding operations implemented by the network device in various methods in embodiments of the present disclosure, which will not be repeated herein for the sake of brevity.

Optionally, the computer program is applicable to an AMP device in embodiments of the present disclosure. The computer program, when executed by a computer, is operable to implement corresponding operations implemented by the AMP device in various methods in embodiments of the present disclosure, which will not be repeated herein for the sake of brevity.

Those of ordinary skill in the art will appreciate that units and algorithmic operations of various examples elaborated in connection with embodiments of the present disclosure may be implemented by electronic hardware or by a combination of computer software and electronic hardware. Whether these functions are performed by means of hardware or software depends on the application and the design constraints of the associated technical solution. Those skilled in the art may use different methods with regard to each particular application to implement the mentioned functionality, but such methods may not be regarded as lying beyond the scope of the present disclosure.

It will be evident to those skilled in the art that, for the sake of convenience and brevity, in terms of the specific working processes of the foregoing systems, apparatuses, and units, reference may be made to the corresponding processes in the foregoing method embodiments, which will not be repeated herein.

It will be appreciated that the systems, apparatuses, and methods disclosed in embodiments of the present disclosure may also be implemented in various other manners. For example, the above apparatus embodiments are merely illustrative, e.g., the division of units is only a division of logical functions, and other manners of division may be available in practice, e.g., multiple units or assemblies may be combined or may be integrated into another system, or some features may be ignored or skipped. In other respects, the coupling or direct coupling or communication connection as illustrated or discussed may be an indirect coupling or communication connection through some interface, device, or unit, and may be electrical, mechanical, or otherwise.

Separated units as illustrated may or may not be physically separated. Components displayed as units may or may not be physical units, and may reside at one position or may be distributed to multiple networked units. Some or all of the units may be selectively adopted according to practical needs to achieve desired objectives of the present disclosure.

In addition, various functional units mentioned in various embodiments of the present disclosure may be integrated into one processing unit or may be present as a number of physically separated units, and two or more units may be integrated into one.

If the functions are implemented as software functional units and sold or used as standalone products, they may be stored in a computer-readable storage medium. Based on such an understanding, the essential technical solution, or the part that contributes to the prior art, or part of the technical solution of the present disclosure may be embodied as software products. The computer software products may be stored in a storage medium and may include multiple instructions that, when executed, can cause a computer device, e.g., a personal computer, a server, a network device, etc., to execute some or all operations of the methods mentioned in various embodiments of the present disclosure. The above storage medium may include various kinds of media that can store program codes, such as a universal serial bus (USB) flash disk, a mobile hard drive, a ROM, a RAM, a magnetic disk, or an optical disk.

The foregoing elaborations are merely implementations of the present disclosure, but are not intended to limit the protection scope of the present disclosure. Any variation or replacement easily thought of by those skilled in the art within the technical scope disclosed in the present disclosure shall belong to the protection scope of the present disclosure. Therefore, the protection scope of the present disclosure shall be subject to the protection scope of the claims.

## Claims

1. A method for wireless communication, comprising:
transmitting, by a network device, a first signal to an ambient power-enabled (AMP) device, wherein the first signal contains system parameter update information.

2. The method of claim 1, wherein the system parameter update information comprises first indication information and/or second indication information, the first indication information is used for determining whether a system parameter update occurs, the second indication information is used for determining an updated system parameter or determining position information of the updated system parameter in a second signal, and the second signal is used for carrying system parameter information.

3. The method of claim 1 or 2, wherein the network device is an access point (AP) device.

4. The method of any one of claims 1 to 3, wherein the system parameter update information comprises basic service set (BSS) parameter update information.

5. The method of claim 4, wherein the BSS parameter update information comprises a count value of a BSS parameter update counter.

6. The method of any one of claims 1 to 5, wherein the first signal is a first physical layer (PHY) protocol data unit (PPDU).

7. The method of claim 6, wherein the system parameter update information is carried in a PHY part in the first PPDU.

8. The method of claim 7, wherein the PHY part in the first PPDU contains a first preamble part, a second preamble part, and the system parameter update information, wherein the first preamble part is used for carrying preamble information of a non-AMP device, and the second preamble part is used for carrying preamble information of the AMP device.

9. The method of claim 7, wherein the PHY part in the first PPDU contains a second preamble part and the system parameter update information, wherein the second preamble part is used for carrying preamble information of the AMP device.

10. The method of claim 8 or 9, wherein the system parameter update information is positioned between the second preamble part and a data part in the PPDU.

11. The method of claim 7, wherein the PHY part in the first PPDU contains a first preamble part and a second preamble part, wherein the first preamble part is used for carrying preamble information of a non-AMP device, the second preamble part is used for carrying preamble information of the AMP device, and the second preamble part further indicates the system parameter update information.

12. The method of claim 7, wherein the PHY part in the first PPDU contains a second preamble part, wherein the second preamble part is used for carrying preamble information of the AMP device, and the second preamble part further indicates the system parameter update information.

13. The method of claim 11 or 12, wherein the second preamble part is represented by a sequence, and different sequences respectively indicate different system parameter update information.

14. The method of claim 11 or 12, wherein the system parameter update information is carried in the second preamble part.

15. The method of claim 14, wherein the second preamble part contains a signal part, and the system parameter update information is carried in the signal part.

16. The method of any one of claims 6 to 15, wherein the first PPDU further contains a data part.

17. The method of claim 16, wherein the first PPDU is a beacon frame.

18. The method of any one of claims 6 to 15, wherein the first PPDU is a null data PPDU (NDP).

19. The method of any one of claims 1 to 6, wherein the system parameter update information is carried in a data part in a first PPDU.

20. The method of claim 19, wherein the system parameter update information is carried in a specific position in the data part in the first PPDU.

21. The method of claim 20, wherein the system parameter update information is carried in first *N* elements or first *N* fields in the data part in the first PPDU, wherein *N* is a positive integer.

22. The method of any one of claims 1 to 21, further comprising:
transmitting, by the network device, a second signal to the AMP device, wherein the second signal is used for carrying system parameter information.

23. The method of claim 22, wherein the system parameter information comprises only an updated configuration of the updated system parameter, or comprises configurations of all system parameters.

24. The method of claim 22 or 23, wherein the second signal is a second PPDU, and the system parameter information is carried in a data part in the second PPDU.

25. The method of claim 24, wherein the data part in the second PPDU comprises configurations of all system parameters, wherein a configuration of the updated system parameter among all the system parameters is carried in first *M* elements or first *M* fields in the data part in the second PPDU, wherein *M* is a positive integer.

26. A method for wireless communication, comprising:
receiving, by an ambient power-enabled (AMP) device, a first signal transmitted by a network device, wherein the first signal contains system parameter update information.

27. The method of claim 26, wherein the system parameter update information comprises first indication information and/or second indication information, the first indication information is used for determining whether a system parameter update occurs, the second indication information is used for determining an updated system parameter or determining position information of the updated system parameter in a second signal, and the second signal is used for carrying system parameter information.

28. The method of claim 26 or 27, wherein the network device is an access point (AP) device.

29. The method of any one of claims 26 to 28, wherein the system parameter update information comprises basic service set (BSS) parameter update information.

30. The method of claim 29, wherein the BSS parameter update information comprises a count value of a BSS parameter update counter.

31. The method of any one of claims 26 to 30, wherein the first signal is a first physical layer (PHY) protocol data unit (PPDU).

32. The method of claim 31, wherein the system parameter update information is carried in a PHY part in the first PPDU.

33. The method of claim 32, wherein the PHY part in the first PPDU contains a first preamble part, a second preamble part, and the system parameter update information, wherein the first preamble part is used for carrying preamble information of a non-AMP device, and the second preamble part is used for carrying preamble information of the AMP device.

34. The method of claim 32, wherein the PHY part in the first PPDU contains a second preamble part and the system parameter update information, wherein the second preamble part is used for carrying preamble information of the AMP device.

35. The method of claim 33 or 34, wherein the system parameter update information is positioned between the second preamble part and a data part in the PPDU.

36. The method of claim 32, wherein the PHY part in the first PPDU contains a first preamble part and a second preamble part, wherein the first preamble part is used for carrying preamble information of a non-AMP device, the second preamble part is used for carrying preamble information of the AMP device, and the second preamble part further indicates the system parameter update information.

37. The method of claim 32, wherein the PHY part in the first PPDU contains a second preamble part, wherein the second preamble part is used for carrying preamble information of the AMP device, and the second preamble part further indicates the system parameter update information.

38. The method of claim 36 or 37, wherein the second preamble part is represented by a sequence, and different sequences respectively indicate different system parameter update information.

39. The method of claim 36 or 37, wherein the system parameter update information is carried in the second preamble part.

40. The method of claim 39, wherein the second preamble part contains a signal part, and the system parameter update information is carried in the signal part.

41. The method of any one of claims 31 to 40, wherein the first PPDU further contains a data part.

42. The method of claim 41, wherein the first PPDU is a beacon frame.

43. The method of any one of claims 31 to 40, wherein the first PPDU is a null data PPDU (NDP).

44. The method of any one of claims 26 to 31, wherein the system parameter update information is carried in a data part in a first PPDU.

45. The method of claim 44, wherein the system parameter update information is carried in a specific position in the data part in the first PPDU.

46. The method of claim 45, wherein the system parameter update information is carried in first *N* elements or first *N* fields in the data part in the first PPDU, wherein *N* is a positive integer.

47. The method of any one of claims 32 to 46, further comprising:
in a case where a system parameter update occurs, receiving a second signal transmitted by the network device, or obtaining updated system parameter information from a data part in the first signal, wherein the second signal is used for carrying system parameter information.

48. The method of claim 47, wherein the system parameter information comprises only an updated configuration of an updated system parameter, or comprises configurations of all system parameters.

49. The method of claim 47 or 48, wherein the second signal is a second PPDU, and the system parameter information is carried in a data part in the second PPDU.

50. The method of claim 49, wherein the data part in the second PPDU comprises configurations of all system parameters, wherein a configuration of an updated system parameter among all the system parameters is carried in first *M* elements or first *M* fields in the data part in the second PPDU, wherein *M* is a positive integer.

51. A network device, comprising:
a communication unit configured to transmit a first signal to an ambient power-enabled (AMP) device, wherein the first signal contains system parameter update information.

52. An ambient power-enabled (AMP) device, comprising:
a communication unit configured to receive a first signal transmitted by a network device, wherein the first signal contains system parameter update information.

53. A network device, comprising:
a memory configured to store a computer program; and
a processor configured to invoke and execute the computer program stored in the memory, to perform the method of any one of claims 1 to 25.

54. An ambient power-enabled (AMP) device, comprising:
a memory configured to store a computer program; and
a processor configured to invoke and execute the computer program stored in the memory, to perform the method of any one of claims 26 to 50.

55. A chip, comprising:
a processor configured to invoke and execute a computer program stored in a memory, to cause a device equipped with the chip to perform the method of any one of claims 1 to 25 or the method of any one of claims 26 to 50.

56. A computer-readable storage medium configured to store a computer program that causes a computer to perform the method of any one of claims 1 to 25 or the method of any one of claims 26 to 50.

57. A computer program product comprising computer program instructions that cause a computer to perform the method of any one of claims 1 to 25 or the method of any one of claims 26 to 50.

58. A computer program being operable with a computer to perform the method of any one of claims 1 to 25 or the method of any one of claims 26 to 50.
